# EUROPEAN PATENT SPECIFICATION

(11) **EP 3 432 113 B1**
(45) Date of publication and mention of the grant of the patent: **17.06.2020**
(21) Application number: 17382470.7
(22) Date of filing: 18.07.2017
(51) Int. Cl.: G05D 23/12, F16L 57/00

(54) **THERMOSTAT FOR A HOUSEHOLD APPLIANCE AND METHOD OF ASSEMBLY OF SAID THERMOSTAT**
THERMOSTAT FÜR EIN HAUSHALTSGERÄT UND VERFAHREN ZUM ZUSAMMENBAU DIESES THERMOSTATS
THERMOSTAT POUR APPAREIL MÉNAGER ET PROCÉDÉ D'ASSEMBLAGE DUDIT THERMOSTAT

(43) Date of publication of application: 23.01.2019
(73) Proprietor: Copreci, S.Coop., 20550 Aretxabaleta (ES)
(72) Inventor: CALDERON SANCHEZ, Jon, 20700 Zumarraga (ES)
(74) Representative: Igartua, Ismael

(56) References cited:
- WO-A2-2012/089449
- FR-A1- 2 760 813
- US-A1- 2010 028 225

## Description

### TECHNICAL FIELD

The present invention relates to thermostats for a household appliance and methods of assembly of said thermostats.

### PRIOR ART

Household appliances comprising at least one thermostat controlling the temperature in a process carried out in said household appliance are known. Said thermostats comprise a thermostat body connected to a knob for setting the desired temperatures, a temperature detection tube or bulb detecting the temperature in the process of the household appliance, and a capillary tube, with one end connected to the temperature detection tube and a second end connected to the thermostat body, which internally contains a fluid that expands with heat, transmitting the temperature detected by the detection tube through an effect caused by the pressure of the fluid in the body of the thermostat.

The thermostat is supplied to the household appliance manufacturer with the capillary tube wound up like a coil and the ends of the capillary tube connected to the thermostat body and/or detection tube by means of welding. Due to the required handling of the capillary tube for unwinding it and assembling it in the cooking appliance, a protective cover is usually assembled in the thermostat, protecting the connection of the capillary tube with the thermostat body and/or the detection tube, against any bending and/or twisting that may cause the capillary tube to break.

WO2012089449A2 discloses a thermostat for a household appliance comprising a thermostat body, a capillary tube, and a temperature detection tube, one end of the capillary tube being connected to the detection tube in an attachment, a protective cover surrounding the attachment, the protective cover comprising a longitudinal side slot going from one end of said lateral cover to another, and transverse slots communicated with said longitudinal side slot. The attachment is housed in said protective cover and the protective cover is secured by bending the capillary tube and taking it through two transverse slots.

### DISCLOSURE OF THE INVENTION

The object of the invention is to provide a thermostat for a household appliance and a method of assembly of said thermostat, as defined in the independent claims 1 and 8.

One aspect of the invention relates to a thermostat for a household appliance, preferably a thermostatic gas valve for a gas cooking appliance, comprising a thermostat body, a capillary tube, and a temperature detection tube, the capillary tube being connected to the thermostat body in a first attachment and to the detection tube in a second attachment, at least one protective cover protecting one of said attachments, the protective cover comprising a longitudinal axis, and said protective cover comprising a longitudinal hole configured for the capillary tube to go through same, and a side main slot in the direction of the longitudinal axis communicated with the hole for inserting the capillary tube into the hole of the protective cover.

The main slot extends from a first end of the protective cover along a section of said protective cover to a second transverse side slot, the protective cover also comprising a third side slot in the direction of the longitudinal axis communicated with the hole, the third slot extending from a second end of the protective cover to the second slot and said third slot being arranged on the side opposite the one on which the main slot is arranged.

Another aspect of the invention relates to a method of assembly of a thermostat such as the one defined above.

The thermostat of the invention comprises a protective cover with a design having slots in the body thereof which allow easily manufacturing it with different materials, including plastic, and which allow being assembled in the thermostat at the site where said thermostat is assembled in the household appliance. The thermostat is delivered with the capillary tube being wound up, and at the site of assembly of the household appliance it is unwound and the protective cover is assembled either in the attachment of the capillary tube with the thermostat body and/or with the detection tube, without any additional handling of the capillary tube. Unlike the prior art, no bending or twisting of the capillary tube is required for assembling the protective cover. A thermostat requiring less assembly time and having higher quality is thereby obtained, reducing capillary tube breakage.

These and other advantages and features of the invention will become evident in view of the drawings and detailed description of the invention.

### DESCRIPTION OF THE DRAWINGS

Figure 1 shows a partial perspective view of an embodiment of the thermostat according to the invention, with a protective cover inserted into the capillary tube of the thermostat.
Figure 2 shows a first perspective view of the protective cover of Figure 1, in which the main slot and the second slot are shown.
Figure 3 shows a second perspective view of the protective cover of Figure 1, in which the second slot and the third slot are shown.
Figure 4 shows a top plan view of the protective cover of Figure 1.
Figure 5 shows a front section view of the protective cover of Figure 4 according to line V-V.
Figures 6a-c show the steps for assembling the protective cover on the thermostat of Figure 1.

### DETAILED DISCLOSURE OF THE INVENTION

A thermostat allows controlling the temperature of an enclosure of a household appliance. The thermostats are of the type which allow regulating an electrical variable or a gas flow, as in the case of thermostatic gas valves. In both cases the thermostats comprise a thermostat body, a capillary tube and a temperature detection tube, each of the ends of the capillary tube being connected to the thermostat body and to the detection tube, respectively. The connection of the ends of the capillary tube to the thermostat body and to the detection tube can be done in different ways, one of which is welding. To protect said connections from breakages due to handling, the thermostats also comprise a protective cover in at least one of the connections. This protective cover can be of the spring rod type, acquiring a substantially conical shape and being internally hollow. In other embodiments of the protective cover, the material is an elastic material. In this type of protective cover, the protective cover must be assembled before the coil is formed with the capillary tube, and before the thermostat is delivered to the manufacturer of the household appliance.

Protective covers of another type are made of a one-piece metal or plastic material, where the thermostat can be manufactured without assembling the protective cover, and where it is the manufacturer of the household appliance who assembles the protective cover on the thermostat after unwinding the coil of capillary tube and before assembling the thermostat in the household appliance. The capillary tube is therefore handled less in the connection areas, and therefore there are fewer breakages. However, in protective covers of this type some type of bending or twisting occurs or some type of tension occurs in the assembly of the protective cover due to the design of said protective cover.

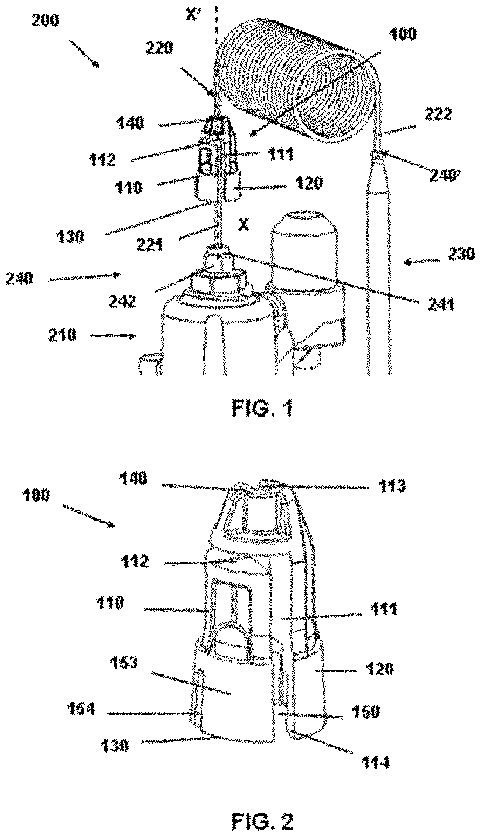

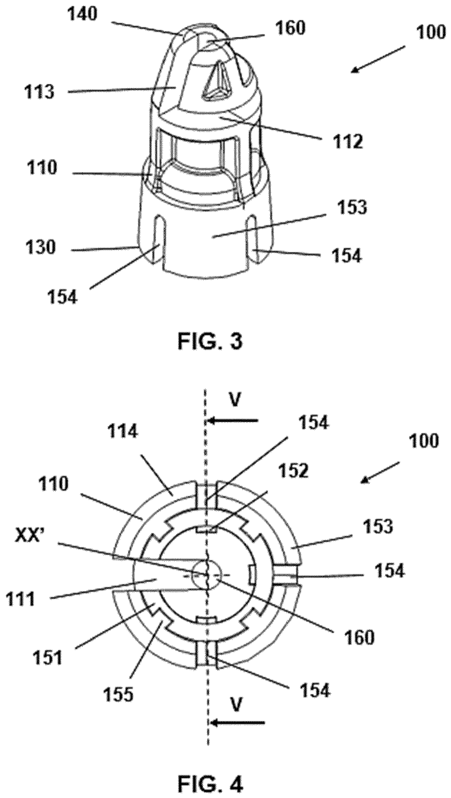

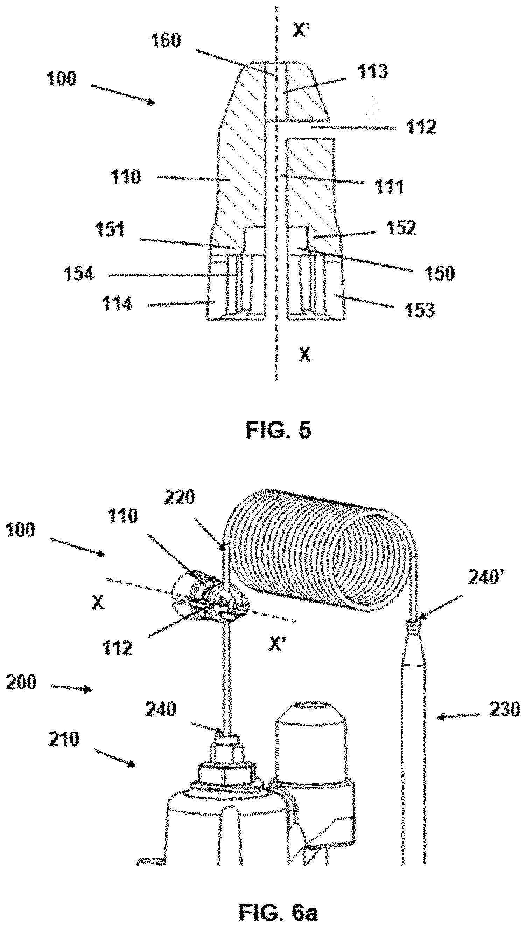

Figure 1 shows a partial perspective view of an embodiment of the thermostat 200 according to the invention, with a protective cover 100 inserted into a capillary tube 220 of the thermostat 200. Figure 2 shows a first perspective view of the protective cover 100 of Figure 1, in which a main slot 111 and a second slot 112 are shown. Figure 3 shows a second perspective view of the protective cover 100 of Figure 1, in which the second slot 112 and a third slot 113 are shown. Figure 4 shows a top plan view of the protective cover 100 of Figure 1, and Figure 5 shows a front section view of the protective cover 100 of Figure 4 according to line V-V.

One aspect of the invention relates to a thermostat 200, which is a thermostatic gas valve for a cooking appliance (not shown in the drawings) in this embodiment, and comprises a thermostat body 210, seen partially in Figure 1, a capillary tube 220, and a temperature detection tube 230, a first end 221 of the capillary tube 220 being connected to the thermostat body 210 by means of welding in a first attachment 240, and a second end 222 of the capillary tube 220 being connected to the detection tube 230 by means of welding in a second attachment 240'. In this embodiment, the thermostat 200 also comprises a protective cover 100 which surrounds a section of capillary tube 220 and the first attachment 240 with the thermostat body 210 once it is assembled. In other embodiments not shown in the drawings, the thermostat also comprises a second protective cover which surrounds a section of capillary tube 220 and the second attachment 240' with the detection tube 230 once it is assembled. The protective cover 100 comprises a body 110 with a longitudinal axis XX' and a side surface 120, and a longitudinal hole 160 configured for the capillary tube 220 to go through same, and a main slot 111 on the side surface 120 in the direction of the longitudinal axis XX', communicated with the hole 160 for inserting the capillary tube 220 into the hole 160 of the protective cover 100.

The main slot 111 extends from a first end 130 of the protective cover 100 along a section of said protective cover 100 to a second orthogonal slot 112 arranged on the side surface 120 of the body 110. The protective cover 100 also comprises a third slot 113 also arranged on the side surface 120, in the direction of the longitudinal axis XX' and communicated with the hole 160, the third slot 113 extending from a second end 140 of the body 110 of the protective cover 100 to the second slot 112, and said third slot 113 being arranged on the side opposite the one on which the main slot 111 is arranged. In other embodiments not shown in the drawings, the protective cover 100 may comprise more than one second slot 112.

In this embodiment, the body 110 has a substantially conical shape and is also substantially symmetrical with respect to the longitudinal axis XX' running through said body 110 from the first end 130 coinciding with the base, to the second end 140 coinciding with the tip of the body 110. In this embodiment of the thermostat 200, the protective cover 100 is made of plastic.

The main slot 111 is developed between the first end 130 of the body 110 and the second slot 112, the second slot 112 being closer to the second end 140 than the first end 130 of the body 110, said second slot 112 being developed in a 180° arc. The third slot 113, which is 180° away from the main slot 111 in this embodiment of the body 110, is developed between the second end 140 of the body 110 and the second slot 112.

The body 110 of the protective cover 100 is internally hollow. Said body 110 is open at the first end 130 and comprises a housing 150 therein up to a certain height along the longitudinal axis XX'. From the end of the housing in height, the hollow space inside the body 110 becomes a cylindrical gap or hole 160 running from the end of the housing 150 to the second end 140 of the body 110. The body 110 thereby comprises a hollow inner space between the first end 130 and the second end 140.

The main slot 111, the second slot 112, and the third slot 113 are built such that the bottom of the main slot 111 and the bottom of the third slot 113 interfere with one another, defining the hole 160 going through the body 110 between the end of the housing 150 and the second end 140 in the direction of the longitudinal axis XX', the axis of the hole 160 coinciding with the longitudinal axis XX' of the body 110. In this embodiment of the thermostat 200, the diameter of the hole 160 fits with the diameter of the capillary tube 220, such that it allows the capillary tube 220 to slide into the hole 160. At the same time, the bottom of the second slot 112 interferes in this embodiment with the bottom of the main slot 111, and with the bottom of the third slot 113, wherein the hole 160 is defined.

The housing 150 of the body 110 which is open at the first end 130 of the body 110 has a substantially cylindrical shape. When the protective cover 100 is assembled in the thermostat 200 in the thermostat body 210, said housing 150 covers the first attachment 240, protecting it. The housing 150 internally comprises a perimetral horizontal projection 151, defined at a height between the first end 130 of the body 110 and before the beginning of the hole 160. This projection 151 splits the housing 150 into two parts, a first lower part protecting a first protrusion 241 of the first attachment 240 having a larger diameter, and a second upper part protecting a second protrusion 242 of the first attachment 240 having a smaller diameter.

In this embodiment, the projection 151 comprises four vertical ribs 152 distributed around the perimeter in the upper part of the housing 150, the ribs 152 being distributed every 90°. In other embodiments of the thermostat 200, the number of ribs 152 and their distribution can be different. These ribs 152 allow fitting with the first protrusion 241 of the first attachment 240, such that they help to fix the protective cover 100 to the first attachment 240 of the thermostat body 210.

In this embodiment of the thermostat 200, the body 110 comprises four flanges 153 formed in the lower part of the body 110 in the wall 114 surrounding the housing 150, each flange 153 being formed with vertical slots 154 going through the wall 114 from the first end 130 of the body 110, and at the height of the housing 150. Each flange 153 comprises a rib 155 on its inner face, in the housing 150. In other embodiments of the thermostat 200, the number of flanges 153 and the number of ribs 155, as well as the distribution thereof, may be different. These ribs 155 allow fitting with the second protrusion 242 of the first attachment 240, such that they help to fix the protective cover 100 to the first attachment 240 of the thermostat body 210.

Another aspect of the invention relates to a method of assembly of a thermostat 200 such as the one defined above and shown in Figures 1 to 5.

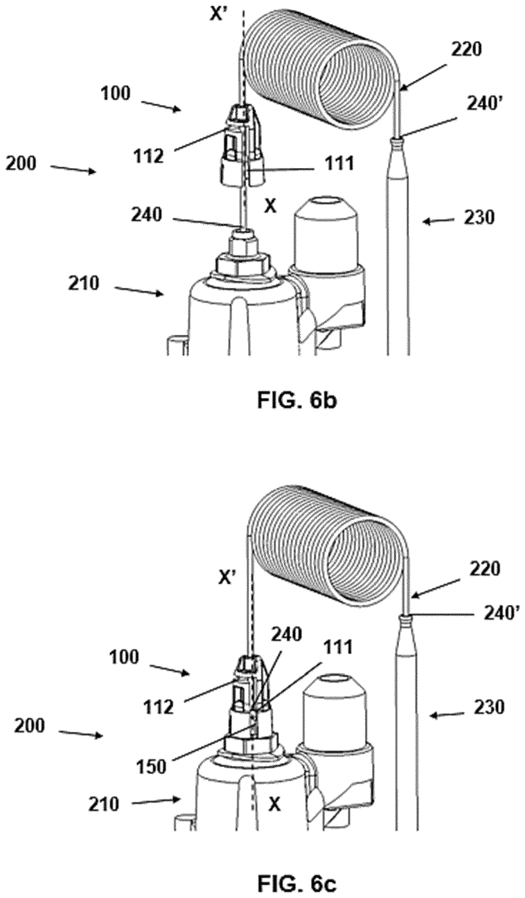

Figures 6a-c show the assembly steps for assembling the protective cover on the thermostat 200. Said method comprises:
- a step of inserting the protective cover 100 into the capillary tube 220, wherein the protective cover 100 is positioned orthogonal with respect to the capillary tube 220, with the main slot 111 positioned facing the first attachment 240, then inserting the second slot 112 of the protective cover 100 into the capillary tube 220,
- a step of aligning the protective cover 100 with the capillary tube 220, wherein the protective cover 100 is positioned vertically with the first end 130 in the lower part and the second end 140 in the upper part of the protective cover 100, the capillary tube 220 being inserted into the longitudinal hole 160 of the protective cover 100 through the main slot 111 and the third slot 113, and
- a step of fitting the protective cover 100 onto the first attachment 240, wherein the protective cover 100 is slid towards said first attachment 240, fitting the ribs 152 of the upper part of the housing 150 with the first protrusion 241 of the first attachment 240, and fitting the ribs 155 of the flanges 153 of the lower part of the housing 150 with the second protrusion 242 of the first attachment 240, the protective cover thereby being assembled and fitted onto the first attachment 240 of the thermostat 200.

The capillary tube 220 coming out of the first attachment 240 with the thermostat body 210 is therefore guided into the hole 160 and protected from bending and twisting in a section having a length corresponding to the height of the protective cover 100.

It is easy to remove the protective cover 100 from the thermostat 200 by simply reversing the order of the previously performed assembly steps.

## Claims

1. Thermostat for a household appliance, comprising a thermostat body (210), a capillary tube (220), and a temperature detection tube (230), the capillary tube (220) being connected to the thermostat body (210) in a first attachment (240) and to the detection tube (230) in a second attachment (240'), at least one protective cover (100) protecting one of said attachments (240, 240'), the protective cover (100) comprising a longitudinal axis (XX'), and said protective cover (100) comprising a longitudinal hole (160) configured for the capillary tube (220) to go through same, and a side main slot (111) in the direction of the longitudinal axis (XX') communicated with the hole (160) for inserting the capillary tube (220) into the hole (160) of the protective cover (100), **characterized in that** the main slot (111) extends from a first end (130) of the protective cover (100) along a section of said protective cover (100) to a second transverse side slot (112), the protective cover (100) also comprising a third side slot (113) in the direction of the longitudinal axis (XX') communicated with the hole (160), the third slot (113) extending from a second end (140) of the protective cover (100) to the second slot (112) and said third slot (113) being arranged on the side opposite the one on which the main slot (111) is arranged.

2. Thermostat according to claim 1, wherein the protective cover (100) has a substantially symmetrical shape with respect to the longitudinal axis (XX'), the axis of the hole (160) coinciding with the longitudinal axis (XX') of the body (110).

3. Thermostat according to claim 1 or 2, wherein the first end (130) of the protective cover (100) comprises a housing (150) for covering the attachment (240, 240').

4. Thermostat according to claim 3, wherein the housing (150) of the protective cover (100) comprises a perimetral horizontal inner projection (151) comprising a plurality of vertical ribs (152) around the perimeter which fit onto the attachment (240, 240').

5. Thermostat according to claim 4, wherein the protective cover (100) comprises a plurality of flanges (153) formed in the wall (114) surrounding the housing (150), each flange (153) being formed with vertical slots (154) going through the wall (114), each flange (153) comprising at least one vertical rib (155) on its inner face which fit onto the attachment (240, 240').

6. Thermostat according to any of the preceding claims, wherein the protective cover (100) is made of plastic.

7. Household appliance, **characterized in that** it comprises a thermostat (200) according to any of the preceding claims.

8. Method of assembly of a thermostat (200) according to any of claims 1 to 6, **characterized in that** it comprises:
- a step of inserting the protective cover (100) onto the capillary tube (220), wherein the protective cover (100) is positioned orthogonal with respect to the capillary tube (220), with the main slot (111) positioned towards the attachment (240, 240'), then inserting the second slot (112) of the protective cover (100) onto the capillary tube (220),
- a step of aligning the protective cover (100) with the capillary tube (220), wherein the protective cover (100) is positioned vertically, the capillary tube (220) being inserted into the longitudinal hole (160) of the protective cover (100) through the main slot (111) and the third slot (113), and
- a step of fitting the protective cover (100) onto the attachment (240, 240'), wherein the protective cover (100) is slid towards said attachment (240, 240'), and wherein the protective cover (100) is arranged covering the attachment (240, 240') of the thermostat (200).

## Patentansprüche

1. Thermostat für ein Haushaltsgerät, umfassend einen Thermostatkörper (210), ein Kapillarrohr (220) und ein Temperaturerfassungsrohr (230), wobei das Kapillarrohr (220) über einen ersten Anschluss (240) mit dem Thermostatkörper (210) und über einen zweiten Anschluss (240') mit dem Erfassungsrohr (230) verbunden ist, wobei mindestens eine Schutzabdeckung (100) einen der genannten Anschlüsse (240, 240') umgibt, wobei die Schutzabdeckung (100) eine Längsachse (XX') aufweist und die genannte Schutzabdeckung (100) ein Längsloch (160), das so gestaltet ist, dass das Kapillarrohr (220) durch dieses hindurchtritt, und einen seitlichen Hauptschlitz (111) in Richtung der Längsachse (XX'), der mit dem Loch (160) zum Einführen des Kapillarrohrs (220) in das Loch (160) der Schutzabdeckung (100) verbunden ist, aufweist, **dadurch gekennzeichnet, dass** sich der Hauptschlitz (111) von einem ersten Ende (130) der Schutzabdeckung (100) entlang eines Teils der genannten Schutzabdeckung (100) bis zu einem quer verlaufenden zweiten seitlichen Schlitz (112) erstreckt, wobei die Schutzabdeckung (100) außerdem einen dritten seitlichen Schlitz (113) in Richtung der Längsachse (XX') aufweist, der mit dem Loch (160) verbunden ist, wobei sich der dritte Schlitz (113) von einem zweiten Ende (140) der Schutzabdeckung (100) bis zum zweiten Schlitz (112) erstreckt und der genannte dritte Schlitz (113) auf der Seite gegenüber der Seite mit dem Hauptschlitz (111) angeordnet ist.

2. Thermostat nach Anspruch 1, wobei die Schutzabdeckung (100) eine zu der Längsachse (XX') im wesentlichen symmetrische Form hat, wobei die Achse des Lochs (160) mit der Längsachse (XX') des Körpers (110) zusammenfällt.

3. Thermostat nach Anspruch 1 oder 2, wobei das erste Ende (130) der Schutzabdeckung (100) ein Gehäuse (150) zum Abdecken des Anschlusses (240, 240') umfasst.

4. Thermostat nach Anspruch 3, wobei das Gehäuse (150) der Schutzabdeckung (100) einen umlaufenden horizontalen inneren Vorsprung (151) aufweist, der an seinem Umfang eine Vielzahl von auf den Anschluss (240, 240') passenden vertikalen Rippen (152) aufweist.

5. Thermostat nach Anspruch 4, wobei die Schutzabdeckung (100) eine Vielzahl von in der das Gehäuse (150) umgebenden Wand (114) ausgebildeten Flanschen (153) aufweist, wobei jeder Flansch (153) mit durch die Wand (114) tretenden vertikalen Schlitzen (154) versehen ist, wobei jeder Flansch (153) mindestens eine auf den Anschluss (240, 240') passende vertikale Rippe (155) an seiner Innenseite aufweist.

6. Thermostat nach einem der vorstehenden Ansprüche, wobei die Schutzabdeckung (100) aus Kunststoff besteht.

7. Haushaltsgerät, **dadurch gekennzeichnet, dass** es einen Thermostat (200) nach einem der vorstehenden Ansprüche umfasst.

8. Verfahren zum Zusammenbau eines Thermostats (200) nach einem der Ansprüche 1 bis 6, **dadurch gekennzeichnet, dass** es umfasst:
- einen Schritt zum Aufsetzen der Schutzabdeckung (100) auf das Kapillarrohr (220), wobei die Schutzabdeckung (100) senkrecht zum Kapillarrohr (220) angeordnet wird und der Hauptschlitz (111) zum Anschluss (240, 240') hin ausgerichtet wird und dann der zweite Schlitz (112) der Schutzabdeckung (100) auf das Kapillarrohr (220) aufgesetzt wird,
- einen Schritt zum Ausrichten der Schutzabdeckung (100) in Bezug auf das Kapillarrohr (220), wobei die Schutzabdeckung (100) vertikal angeordnet wird und das Kapillarrohr (220) durch den Hauptschlitz (111) und den dritten Schlitz (113) in das Längsloch (160) der Schutzabdeckung (100) eingeführt wird, und
- einen Schritt zum Aufstecken der Schutzabdeckung (100) auf den Anschluss (240, 240'), wobei die Schutzabdeckung (100) zu dem genannten Anschluss (240, 240') hin geschoben wird, und die Schutzabdeckung (100) so angeordnet wird, dass sie den Anschluss (240, 240') des Thermostats (200) abdeckt.

## Revendications

1. Thermostat pour un appareil ménager, comprenant un corps de thermostat (210), un tube capillaire (220) et un tube de détection de température (230), le tube capillaire (220) étant relié au corps de thermostat (210) dans un premier accessoire (240) et au tube de détection (230) dans un second accessoire (240'), au moins un couvercle de protection (100) protégeant l'un desdits accessoires (240, 240'), le couvercle de protection (100) comprenant un axe longitudinal (XX'), et ledit couvercle de protection (100) comprenant un trou longitudinal (160) configuré pour le passage du tube capillaire (220), et une fente principale latérale (111) dans la direction de l'axe longitudinal (XX') communiquant avec le trou (160) pour insérer le tube capillaire (220) dans le trou (160) du couvercle de protection (100), **caractérisé en ce que** la fente principale (111) s'étend d'une première extrémité (130) du couvercle de protection (100) le long d'une section dudit couvercle de protection (100) jusqu'à une deuxième fente latérale transversale (112), le couvercle de protection (100) comprenant également une troisième fente latérale (113) dans la direction de l'axe longitudinal (XX') communiquant avec le trou (160), la troisième fente (113) s'étendant d'une deuxième extrémité (140) du couvercle de protection (100) à la deuxième fente (112) et ladite troisième fente (113) étant disposée sur le côté opposé à celui sur lequel est disposée la fente principale (111).

2. Thermostat selon la revendication 1, dans lequel le couvercle de protection (100) a une forme sensiblement symétrique par rapport à l'axe longitudinal (XX'), l'axe du trou (160) coïncidant avec l'axe longitudinal (XX') du corps (110).

3. Thermostat selon la revendication 1 ou 2, dans lequel la première extrémité (130) du couvercle de protection (100) comprend un boîtier (150) pour couvrir l'accessoire (240, 240').

4. Thermostat selon la revendication 3, dans lequel le boîtier (150) du couvercle de protection (100) comprend une saillie intérieure horizontale périphérique (151) comprenant une pluralité de nervures verticales (152) autour du périmètre qui s'adaptent sur l'accessoire (240, 240').

5. Thermostat selon la revendication 4, dans lequel le couvercle de protection (100) comprend une pluralité de brides (153) formées dans la paroi (114) entourant le boîtier (150), chaque bride (153) étant formée avec des fentes verticales (154) traversant la paroi (114), chaque bride (153) comprenant au moins une nervure verticale (155) sur sa face intérieure qui s'adapte sur l'accessoire (240, 240').

6. Thermostat selon l'une des revendications précédentes, dans lequel le couvercle de protection (100) est en matière plastique.

7. Appareil ménager, **caractérisé en ce qu'**il comprend un thermostat (200) selon l'une des revendications précédentes.

8. Procédé de montage d'un thermostat (200) selon l'une quelconque des revendications 1 à 6, **caractérisé en ce qu'**il comprend:
- une étape d'insertion du couvercle de protection (100) sur le tube capillaire (220), dans laquelle le couvercle de protection (100) est positionné orthogonalement par rapport au tube capillaire (220), avec la fente principale (111) positionnée vers l'accessoire (240, 240'), puis l'insertion de la deuxième fente (112) du couvercle de protection (100) sur le tube capillaire (220),
- une étape d'alignement du couvercle de protection (100) avec le tube capillaire (220), dans laquelle le couvercle de protection (100) est positionné verticalement, le tube capillaire (220) étant inséré dans le trou longitudinal (160) du couvercle de protection (100) à travers la fente principale (111) et la troisième fente (113), et
- une étape de mise en place du couvercle de protection (100) sur l'accessoire (240, 240'), dans laquelle le couvercle de protection (100) est glissé vers ledit accessoire (240, 240'), et dans laquelle le couvercle de protection (100) est disposé de manière à couvrir l'accessoire (240, 240') du thermostat (200).
